(19) Europäisches Patentamt
European Patent Office
Office européen des brevets

(11) Publication number: **0 444 960 B1**

(12) **EUROPEAN PATENT SPECIFICATION**

(45) Date of publication of patent specification: **21.06.95**

(51) Int. Cl.6: **C08L 83/07**, C08L 83/05

(21) Application number: **91301736.4**

(22) Date of filing: **01.03.91**

(54) **Curable organopolysiloxane composition.**

(30) Priority: **02.03.90 JP 51409/90**

(43) Date of publication of application:
**04.09.91 Bulletin 91/36**

(45) Publication of the grant of the patent:
**21.06.95 Bulletin 95/25**

(84) Designated Contracting States:
**DE FR GB**

(56) References cited:
**US-A- 4 339 564**
**US-A- 4 554 339**

(73) Proprietor: **SHIN-ETSU CHEMICAL CO., LTD.**
**6-1, Ohtemachi 2-chome**
**Chiyoda-ku**
**Tokyo (JP)**

(72) Inventor: **Ikeno, Masayuki**
**117, Yanase**
**Annaka-shi,**
**Gunma-ken (JP)**
Inventor: **Fujiki, Hironao**
**7-12, Iwahana-machi**
**Takasaki-shi,**
**Gunma-ken (JP)**

(74) Representative: **Votier, Sidney David et al**
**CARPMAELS & RANSFORD**
**43, Bloomsbury Square**
**London WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 444 960 B1

## Description

### BACKGROUND OF THE INVENTION

#### 1. Field of the Invention

This invention relates to an addition-curing type organopolysiloxane composition which gives cured products in the form of gel with effective inhibition of oil exudation, and to cured products of the same.

#### 2. Description of the Prior Art

Cured products in the form of gel of silicone rubber (hereinafter referred to as "silicone gels"), with their excellent electrical insulation properties and stability of electrical properties as well as excellent pliability, have been used for potting or sealing of electric and electronic parts, especially as a coating material for covering control circuit components, such as power transistors, integrated circuits, capacitors, etc. to protect these components against thermal or mechanical interferences.

For forming such silicone gels, there have been known a variety of addition-curing type organopolysiloxane compositions.

For instance, there have been known those compositions which comprise an organopolysiloxane having silicon-bonded vinyl groups and an organohydrogenpolysiloxane having a silicon-bonded hydrogen atom and from which silicone gels are obtained through crosslinking in the presence of a platinum catalyst (See, for example, Japanese Preexamination Patent Publication (KOKAI) Nos. 56-143241 (1981), 62-39659 (1987), 63-35655 (1988) and 63-33475 (1988)).

However, the silicone gels obtained from these organopolysiloxane compositions have the problem of exudation of oily components thereof. That is, when gels are formed from the conventional organopolysiloxane compositions, unreacted organopolysiloxanes may be left in the gel, or large amounts of inactive organosiloxanes may be formed during polymerization by equilibration reaction. Such unreacted or inactive organopolysiloxanes will ooze out of the surface of the silicone gel, thereby leading to contamination of electric or electronic parts, causing contact failure and the like troubles, or swelling other silicone rubber elastomers.

### SUMMARY OF THE INVENTION

Accordingly, it is an object of this invention to provide addition-curing type organopolysiloxane compositions capable of forming a gel with effective inhibition of oil exudation.

The aforementioned object is attained successfully according to this invention, by using a vinyl group-containing organopolysiloxane which, in part, has a silicon-bonded hydrogen atom.

According to this invention, there is provided an organopolysiloxane composition comprising:

(A) an organopolysiloxane having a silicon-bonded vinyl group and a silicon-bonded hydrogen atom,

(B) an organohydrogenpolysiloxane which has the following average composition formula [I]:

$$R_aH_bSiO_{\frac{4-a-b}{2}} \qquad [I]$$

wherein R is a substituted or unsubstituted monovalent hydrocarbon group containing no unsaturated bonds therein, and a and b are numbers satisfying the inequalities: $0 < a < 3$, $0 < b \leqq 2$, and $1 \leqq a + b \leqq 3$, and which contains at least two silicon-bonded hydrogen atoms in its molecule, and

(C) an addition reaction catalyst,

the organopolysiloxane (A) containing each of said vinyl groups and said hydrogen atoms in an amount of from 0.05 to 4.0 mol% on average based on the total amount of the silicon-bonded monovalent atoms and groups in the organopolysiloxane (A), and containing from 0.05 to 1.8 said hydrogen atoms per one said vinyl group, wherein the total number of the silicon-bonded hydrogen atoms in components (A) and (B) is from 0.5 to 2 per one silicon-bonded group in the component (A).

In this invention, the organopolysiloxane (A) as the main constituent is capable of forming a partially crosslinked structure by itself even where it does not take part in the crosslinking reaction effected by the organohydrogenpolysiloxane (B) acting as a crosslinking agent. Therefore, the organopolysiloxane is

prevented effectively from being left uncured in the cured product of the organopolysiloxane composition, and the exudation of such uncured organopolysiloxane from the resulting silicone gel is obviated.

The organopolysiloxane compositions of this invention as above give silicone gels with effective prevention of oil exudation. It is therefore possible, by forming the silicone gel of this invention on the surfaces of electric or electronic parts, semiconductor devices, etc., to achieve effective coating or sealing of the parts, devices, etc., and to overcome effectively the troubles such as contamination of the parts, contact failure, swelling of other silicone rubber elastomers and so on which might otherwise arise from oil exudation.

## DETAILED DESCRIPTION OF PREFERRED EMBODIMENTS

The term "silicone gel" herein means a cured silicone product which has a penetration, as specified in ASTM D-1403 (1/4 cone), of greater than 0. The silicone gel is similar to silicone elastomers and silicone resins in that it has a three-dimensional network structure, but is distinguished from the silicone elastomers and silicone resins in that the values of the penetration of the latter cured silicones are 0.

### (A) Organopolysiloxane

The organopolysiloxane of component (A) used in this invention is an organopolysiloxane which has a silicon-bonded vinyl group and a silicon-bonded hydrogen atom in its molecule and which may be either linear or branched in structure.

The organopolysiloxane may, for example, has the following average composition formula [II]:

$$R'_cSiO_{\frac{4-c}{2}} \qquad [II]$$

wherein each R′ is a silicon-bonded monovalent atom or group selected from a vinyl group, a hydrogen atom and a substituted or unsubstituted monovalent hydrocarbon group exclusive of unsaturated aliphatic group, and c is a number of from 1.8 to 3.0. The silicon-bonded vinyl group and silicon-bonded hydrogen atom may be bonded either to a silicon atom at a terminal end of the molecular chain or to a silicon atom at an intermediate position in the molecular chain.

In the organopolysiloxane, the amount of the vinyl groups on an average is from 0.05 to 4.0 mol%, preferably from 0.2 to 2.0 mol%, based on the total amount of the silicon-bonded monovalent atoms and groups. On the same basis, the amount of the silicon-bonded hydrogen atoms on an average is from 0.05 to 4.0 mol%, preferably from 0.1 to 2.0 mol%. When the amount of the vinyl groups or the hydrogen atoms exceeds the range just mentioned, the resulting gel will be too hard to function as a gel, whereas when the amount is below the range, it is difficult to achieve gel formation.

The number of the silicon-bonded hydrogen atoms contained in the organopolysiloxane is from 0.05 to 1.8, preferably from 0.06 to 0.9, per one silicon-bonded vinyl group. If the number of said hydrogen atoms is excessively large as compared with the number of said vinyl groups, the resulting gel will again be too hard to function as a gel.

The aforementioned silicon-bonded monovalent atoms or groups other than the vinyl groups and hydrogen atoms are substituted or unsubstituted monovalent hydrocarbon groups exclusive of unsaturated aliphatic hydrocarbon groups. The substituted or unsubstituted monovalent hydrocarbon groups are generally those having from 1 to 12 carbon atoms, and include, for example, alkyl groups having from 1 to 12 carbon atoms, such as methyl, ethyl, propyl, butyl, pentyl, hexyl, octyl, decyl, dodecyl, etc.; aralkyl groups having from 7 to 12 carbon atoms, such as 2-phenylethyl, 2-phenylpropyl, etc.; aryl groups having from 6 to 12 carbon atoms, such as phenyl, tolyl, etc.; and substituted hydrocarbon groups such as 3,3,3-trifluoropropyl, and so on. Of these monovalent hydrocarbon groups, the methyl group is preferred in view of the heat resistance and other physical properties of the resulting gel.

Specific examples of the organopolysiloxane of component (A) include the followings:

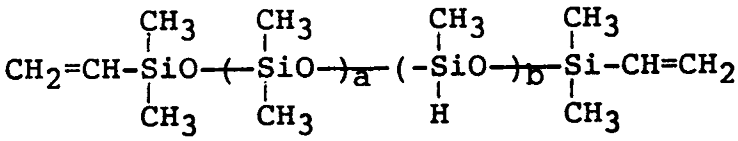 ,

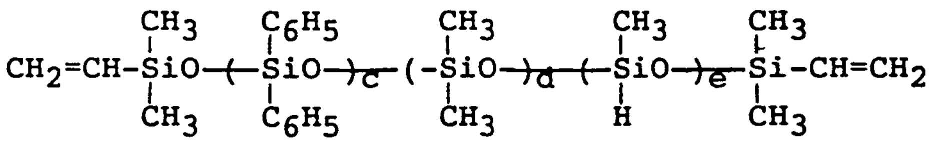 ,

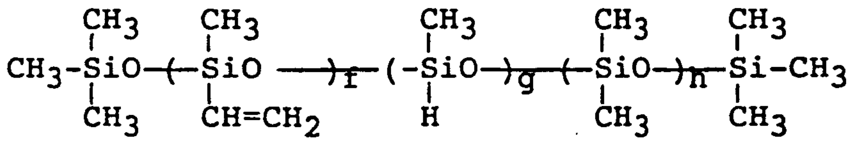 ,

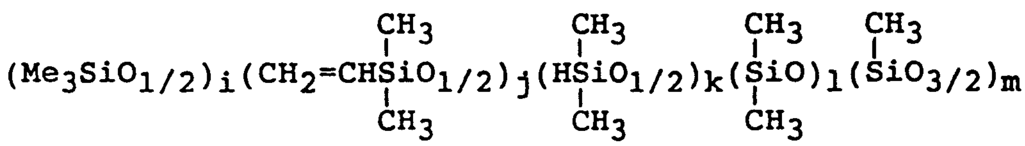 ,

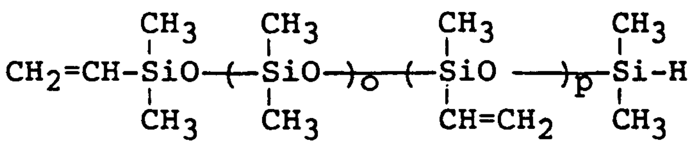 , and

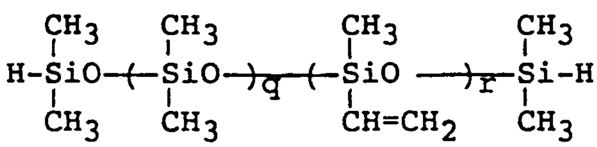 ,

wherein a to r are each a positive integer.

It is preferable that the viscosity of the organopolysiloxne at 25 °C be in the range of from 100 to 100,000 mPas, more preferably from 300 to 5,000 cP. If the viscosity is too low, the composition will be excessively fluid and the physical properties obtained after reaction will be unsatisfactory. Too high a viscosity value, on the other hand, renders the composition poor in workability and defoamability.

The organopolysiloxane of component (A) can be produced by a method which is known per se. Further, the organopolysiloxane may be either linear or branched in structure, as mentioned above. In order to form a silicone gel having good cold resistance, however, a branched structure is preferred.

(B) Organohydrogenpolysiloxane

The organohydrogenpolysiloxane (B) has the aforementioned average composition formula [I]:

$$R_aH_bSiO_{\frac{4-a-b}{2}} \qquad [I]$$

wherein a and b are numbers satisfying the inequalities: $0 < a < 3$, $0 < b \leqq 2$, and $1 \leqq a + b \leqq 3$, and R is an organic group as a side chain bonded to a silicon atom and is a substituted or unsubstituted monovalent hydrocarbon groups containing no unsaturated bond.

Examples of R include the groups mentioned above as exemplar R' groups in the formula [II], except the vinyl group.

The organohydrogenpolysiloxane of component (B) used in this invention serves as a crosslinking agent, and performs an addition reaction with the vinyl groups in the component (A) to form a silicone gel. The organohydrogenpolysiloxane should have at least two silicon-bonded hydrogen atoms in its molecule. Such hydrogen atoms may be bonded either to a silicon atom at a terminal end of the molecule or to a silicon atom at an intermediate position in the molecule.

The siloxane skeleton of the organohydrogenpolysiloxane may be linear, cyclic or branched. When the resulting silicone gel is required to show good cold resistance in its use, however, a branched siloxane skeleton is preferred. For use where a certain strength must be maintained, the organohydrogenpolysiloxane may be a resinous one soluble in nonpolar solvents. The viscosity of the organohydrogenpolysiloxane is not particularly restricted; however, a viscosity in the range from 10 to 1,000 mPas (at 25°C) is preferred, in view of easy synthesis of the organohydrogenpolysiloxane and workability of the resulting composition.

The organohydrogenpolysiloxane (B) is used in an amount such that the total number of the silicon-bonded hydrogen atoms in the components (A) and (B) is preferably from 0.5 to 2, more preferably from 0.6 to 1, per one silicon-bonded vinyl group in the component (A). If the amount of the silicon-bonded hydrogen atoms is too small, some vinyl groups will be left in the resulting silicone gel, resulting in poor heat resistance. If the amount of the silicon-bonded hydrogen atoms is too large, the heat resistance is again poor, and foaming may take place at the time of curing.

(C) Addition reaction catalyst

The addition reaction catalyst used in this invention may be any catalyst which is capable of accelerating the addition reaction between the vinyl groups in the component (A) and the hydrosilyl groups in the components (A) and (B). Representative addition reaction catalysts usable are platinum, palladium and rhodium catalysts. More specific examples of the addition catalysts include chloroplatinic acid, alcohol-modified chloroplatinic acid, coordination compounds of chloroplatinic acid with an olefin, vinylsiloxane or acetylene compound, tetrakis(triphenylphosphine)palladium, chlorotris(triphenylphosphine)rhodium, etc., of which particularly preferred are platinum catalysts.

The catalysts are generally used in an amount of from 0.1 to 100 ppm based on the total amount of the components (A) and (B).

Other compounding ingredients

In addition to the above components (A) to (C), the organopolysiloxane composition according to this invention may further contain a variety of compounding ingredients, which are known per se.

For example, inorganic filler such as fumed silica, silica aerogel, precipitated silica, pulverized silica, diatomaceous earth, iron oxide, zinc oxide, titanium oxide, calcium carbonate, magnesium carbonate, zinc carbonate, carbon black, and so on can be added to the composition of this invention, in order to control the hardness, mechanical strength, etc. of the silicone gel obtained from the composition. Of course, hollow inorganic fillers, hollow organic fillers, spherical fillers of an organosilicone resin or rubbery material, etc. may also be added. Further, reaction inhibitor such as cyclic polymethylvinylsiloxane compounds, acetylene compounds, organophosphorus compound, etc. can be added to the composition, thereby controlling the curing reaction. Moreover, an organopolysiloxane having at least one silicon-bonded vinyl group in its molecule may be added to the composition, for controlling the hardness, etc. of the resulting silicone gel.

Such compounding ingredients can be used in any desired amount, unless detrimental to the properties of the silicone gel obtained.

Formation of silicone gel

The organopolysiloxane composition of this invention, comprising the aforementioned components, can be cured into a silicone gel which is free from oil exudation.

The formation of the silicone gel may be carried out by the conventionally known methods, for example, by pouring the addition-curing type organopolysiloxane composition of the invention into a suitable mold and curing the composition, or by coating an appropriate substrate with the composition and then curing the composition. Generally, the curing can be performed easily by a heating treatment at 60 to 150 °C for about 180 seconds to 30 minutes.

EXAMPLES

This invention will now be further illustrated by the following examples. In the examples, Me and Vi represent the methyl and the vinyl group, respectively, all the viscosity values are values at 25 °C.

Example 1

A uniform mixture was prepared using 100 parts by weight of an organopolysiloxane comprising 0.52 mol% of $ViMe_2SiO_{0.5}$ units, 0.52 mol% of $HMe_2SiO_{0.5}$ units, 0.26 mol% of ViMeSiO units and 98.7 mol% of $Me_2SiO$ units and having a viscosity of 600 mPas, 1 part by weight of a methylhydrogenpolysiloxane comprising 10 mol% of $HMe_2SiO_{0.5}$ units and 90 mol% of $Me_2SiO$ units, and 0.01 part by weight of ethynylcyclohexanol. To the mixture was added a chloroplatinic acid-vinylsiloxane complex in an amount of 5 ppm, in terms as platinum, based on the total amount of the mixture. The admixture was mixed uniformly to prepare an organopolysiloxane composition I.

The composition I was cured by heating at 150 °C for 1 hour, to give a transparent silicone gel. The silicone gel was subjected to a penetration test and an extraction test. The results are shown in Table 1.

The penetration and extraction tests were carried out as follows:

Penetration was measured according to ASTM D-1403, using a 1/4 cone consistometer.

Extraction test was carried out by subjecting 5 g of the silicone gel to Soxhlet extraction using n-hexane for 10 hours, and measuring the extracted amount.

Example 2

The procedure of Example 1 was repeated in the same manner as above except that 100 parts by weight of an organopolysiloxane comprising 1 mol% of $ViMe_2SiO_{0.5}$ units, 0.2 mol% of HMeSiO units and 98.8 mol% of $Me_2SiO$ units and having a viscosity of 700 mPas was used in place of the organopolysiloxane used in Example 1 and that the amount of the methylhydrogenpolysiloxane used in Example 1 was changed to 4 parts by weight, to prepare an organopolysiloxane composition II, and a transparent silicone gel was obtained therefrom.

The silicone gel was subjected to the same penetration and extraction tests as in Example 1. The results are shown in Table 1.

Comparative Example 1

The procedure of Example 1 was repeated in the same manner except that 100 parts of an organopolysiloxane comprising 1 mol% of $Me_3SiO_{0.5}$ units, 1 mol% of ViMeSiO units and 98 mol% of $Me_2SiO$ units and having a viscosity of 700 mPas was used in place of the organopolysiloxane used in Example 1 and that the amount of the methylhydrogenpolysiloxane used in Example 1 was changed to 6 parts by weight, to prepare an organopolysiloxane composition III, and a transparent silicone gel was obtained therefrom.

The penetration and extraction test results for the silicone gel thus obtained are shown in Table 1.

Table 1

| | Example 1 | Example 2 | Comparative Example 1 |
|---|---|---|---|
| Composition | I | II | III |
| SiH/SiVi* | 0.8 | 0.6 | 0.6 |
| Penetration | 40 | 60 | 63 |
| Percent Soxhlet Extraction | 10% | 13% | 34% |

*The proportion in the entire composition.

## Claims

**1.** An organopolysiloxane composition comprising:
(A) an organopolysiloxane having a silicon-bonded vinyl group and a silicon-bonded hydrogen atom,
(B) an organohydrogenpolysiloxane which has the following average composition formula [I]:

$$R_aH_bSiO_{\frac{4-a-b}{2}} \qquad [I]$$

wherein R is a substituted or unsubstituted monovalent hydrocarbon group containing no unsaturated bonds therein, and a and b are numbers satisfying the inequalities: $0 < a < 3$, $0 < b \leqq 2$, and $1 \leqq a + b \leqq 3$, and which contains at least two silicon-bonded hydrogen atoms in its molecule, and
(C) an addition reaction catalyst,
the organopolysiloxane (A) containing each of said vinyl groups and said hydrogen atoms in an amount of from 0.05 to 4.0 mol% on average based on the total amount of the silicon-bonded monovalent atoms and groups in the organopolysiloxane (A), and containing from 0.05 to 1.8 said hydrogen atoms per one said vinyl group,
wherein the total number of the silicon-bonded hydrogen atoms in the components (A) and (B) is from 0.5 to 2 per one silicon-bonded vinyl group in the component (A).

**2.** The composition according to claim 1, wherein the organopolysiloxane (A) has the average composition formula [II]:

$$R'_cSiO_{\frac{4-c}{2}} \qquad [II]$$

wherein each R' is a silicon-bonded monovalent atom or group selected from the group consisting of a vinyl group, a hydrogen atom and a substituted or unsubstituted monovalent hydrocarbon group exclusive of unsaturated aliphatic groups, and c is a number of from 1.8 to 3.0.

**3.** The composition according to claim 1, wherein the organopolysiloxane (A) contains the silicon-bonded vinyl groups in an amount of from 0.2 to 2.0 mol% on average and the silicon-bonded hydrogen atoms in an amount of from 0.1 to 2.0 mol% on average, the amounts being based in each case on the total amount of the silicon-bonded monovalent atoms and groups in one molecule thereof.

**4.** The composition according to claim 1, wherein the organopolysiloxane (A) contains from 0.06 to 0.9 said hydrogen atoms per one said vinyl group.

**5.** The composition according to claim 5, wherein the total number of the silicon-bonded hydrogen atoms in the components (A) and (B) is from 0.6 to 1 per one silicon-bonded vinyl group in the component

(A).

## Patentansprüche

1. Organopolysiloxan-Zusammensetzung, umfassend:
   (A) ein Organopolysiloxan mit einer Silicium-gebundenen Vinylgruppe und einem Silicium-gebundenen Wasserstoffatom,
   (B) ein Organowasserstoffpolysiloxan, welches die folgende durchschnittliche Zusammensetzungsformel [I]:

$$R_aH_bSiO_{\frac{4-a-b}{2}} \qquad [I]$$

   besitzt, Worin Reine substituierte oder unsubstituierte einwertige Kohlenwasserstoffgruppe ist, welche keine ungesättigten Bindungen enthält, und a und b Zahlen sind, die die Ungleichungen

   $0 < a < 3$, $0 < b \leqq 2$, und $1 \leqq a + b \leqq 3$

   erfüllen, und welches mindestens zwei Silicium-gebundene Wasserstoffatome in seinem Molekül enthält, und
   (C) einen Additionsreaktionskatalysator,
   wobei das Organopolysiloxan (A) sowohl die Vinylgruppen als auch die Wasserstoffatome in einer Menge von durchschnittlich 0,05 bis 4,0 Mol-%, bezogen auf die Gesamtmenge der Silicium-gebundenen, einwertigen Atome und Gruppen im Organopolysiloxan (A), enthält und von 0,05 bis 1,8 Wasserstoffatome pro einer Vinylgruppe enthält,
   wobei die Gesamtzahl der Silicium-gebundenen Wasserstoffatome in den Komponenten (A) und (B) von 0,5 bis 2 pro einer Silicium-gebundenen Vinylgruppe in der Komponente (A) ist.

2. Zusammensetzung gemäß Anspruch 1, wobei das Organopolysiloxan (A) die durchschnittliche Zusammensetzungsformel [II]:

$$R'_cSiO_{\frac{4-c}{2}} \qquad [II]$$

   besitzt, worin jede R' ein Silicium-gebundenes, einwertiges Atom oder Gruppe ist, ausgewählt aus der Gruppe von einer Vinylgruppe, einem Wasserstoffatom und einer substituierten oder unsubstituierten einwertigen Kohlenwasserstoffgruppe außer ungesättigten aliphatischen Gruppen, und c eine Zahl von 1,8 bis 3,0 ist.

3. Zusammensetzung nach Anspruch 1, wobei das Organopolysiloxan (A) enthält: die Siliciumgebundenen Vinylgruppen in einer Menge von durchschnittlich 0,2 bis 2,0 Mol-% und die Silicium-gebundenen Wasserstoffatome in einer Menge von durchschnittlich 0,1 bis 2,0 Mol-%, wobei die Mengen in jedem Fall aufdie Gesamtmenge der Silizium-gebundenen einwertigen Atome und Gruppen in einem Molekül davon bezogen sind.

4. Zusammensetzung nach Anspruch 1, wobei das Organopolysiloxan (A) von 0,06 bis 0,9 Wasserstoffatome pro einer Vinylgruppe enthält.

5. Zusammensetzung nach Anspruch 5, wobei die Gesamtzahl der Silicium-gebundenen Wasserstoffatome in den Komponenten (A) und (B) von 0,6 bis 1 pro einer Silicium-gebundenen Vinylgruppe in der Komponente (A) ist.

## Revendications

**1.** Composition d'organopolysiloxane, comprenant:

(A) un organopolysiloxane possédant un groupe vinylique lié à un silicium et un atome d'hydrogène lié à un silicium,

(B) un organohydrogénopolysiloxane dont la formule brute moyenne [I] est la suivante:

$$R_aH_bSiO_{\frac{4-a-b}{2}} \qquad [I]$$

dans laquelle R est un groupe hydrocarboné monovalent, substitué ou non substitué, ne contenant pas de liaisons insaturées, et a et b sont des nombres satisfaisant aux inégalités: $0 < a < 3$, $0 < b \leqq 2$ et $1 \leqq a + b \leqq 3$, et qui contient au moins deux atomes d'hydrogène liés à un silicium dans sa molécule, et

(C) un catalyseur de réaction d'addition,

l'organopolysiloxane (A) contenant chacun desdits groupes vinyliques et desdits atomes d'hydrogène à raison de 0,05% à 4,0% en mole, en moyenne, par rapport à la quantité totale d'atomes et de groupes monovalents liés à un silicium dans l'organopolysiloxane (A), et contenant de 0,05 à 1,8 desdits atomes d'hydrogène par groupe vinylique, dans laquelle le nombre total d'atomes d'hydrogène liés à un silicium dans les constituants (A) et (B) est de 0,5 à 2 par groupe vinylique lié à un silicium dans le constituant (A).

**2.** Composition selon la revendication 1, dans laquelle l'organopolysiloxane (A) possède la formule brute moyenne [II]:

$$R'_cSiO_{\frac{4-c}{2}} \qquad [II]$$

dans laquelle chaque R' est un atome ou un groupe monovalent lié à un silicium, choisi dans le groupe constitué par un groupe vinylique, un atome d'hydrogène et un groupe hydrocarboné monovalent, substitué ou non substitué, à l'exclusion de groupes aliphatiques insaturés, et c est un nombre de 1,8 à 3,0.

**3.** Composition selon la revendication 1, dans laquelle l'organopolysiloxane (A) contient les groupes vinyliques liés à un silicium dans une proportion de 0,2 à 2,0% en mole en moyenne, et les atomes d'hydrogène liés à un silicium dans une proportion de 0,1 à 2,0% en mole en moyenne, les proportions étant, dans chaque cas, rapportées à la quantité totale d'atomes et de groupes monovalents liés à un silicium dans une molécule de ce composé.

**4.** Composition selon la revendication 1, dans laquelle l'organopolysiloxane (A) contient de 0,06 à 0,9 desdits atomes d'hydrogène par groupe vinylique.

**5.** Composition selon la revendication 5, dans laquelle le nombre total d'atomes d'hydrogène liés à un silicium dans les constituants (A) et (B) est de 0,6 à 1 par groupe vinylique lié à un silicium dans le constituant (A).